# EUROPEAN PATENT SPECIFICATION

(11) **EP 3 603 151 B1**
(45) Date of publication and mention of the grant of the patent: **02.12.2020**
(21) Application number: 18711353.5
(22) Date of filing: 20.03.2018
(51) Int. Cl.: H04W 16/14, H04W 72/12, H04W 74/08

(54) **DYNAMIC ADJUSTMENT OF THE USE OF THE RADIO SPECTRUM BY CBSD RADIO BASE STATIONS**
DYNAMISCHE ANPASSUNG DER VERWENDUNG DES FUNKSPEKTRUMS DURCH CBSD-FUNKBASISSTATIONEN
AJUSTEMENT DYNAMIQUE DE L'UTILISATION DU SPECTRE RADIO PAR DES STATIONS RADIO CBSD DE BASE

(30) Priority: 22.03.2017 FR 1700296
(43) Date of publication of application: 05.02.2020
(73) Proprietor: Red Technologies SAS, 75015 Paris (FR)
(72) Inventor: MULLER, Pierre-Jean, 94100 Saint-Maur-Des-Fosses (FR); LE THIERRY D'ENNEQUIN, Christophe, 75005 Paris (FR)
(86) International application number: PCT/EP2018/057048
(87) International publication number: WO 2018/172367

(56) References cited:
- WO-A1-2015/084959
- WO-A1-2017/030697
- MUNAWWAR M. SOHUL ET AL: "Spectrum access system for the citizen broadband radio service", IEEE COMMUNICATIONS MAGAZINE., vol. 53, no. 7, 1 July 2015 (2015-07-01), pages 18-25, XP055397386, US ISSN: 0163-6804, DOI: 10.1109/MCOM.2015.7158261

## Description

### DESCRIPTION OF THE DRAWINGS

Figure 1 shows a view of contextual spectrum coordination according to the state of the art.
Figure 2 shows an example of equivalence between MAC profiles associated with different radio access technologies.
Figure 3 shows a view of the architecture of the Citizens Broadband Radio Service (CBRS) according to the state of the art.
Figure 4 shows a view of the architecture of the CBRS service enriched according to the present invention.
Figure 5 shows an example of a dynamic configuration of Citizens Broadband Radio Service Devices (CBSDs) based on the use of the spectrum, in accordance with the present invention and as part of the CBRS service.
Figure 6 shows another example of dynamic configuration of CBSDs as a function of spectrum usage in accordance with the present invention and as part of the CBRS service.
Figure 7 shows an example of dynamic configuration of CBSDs according to the nature of the users authorized to connect to the CBSDs, in accordance with the present invention and as part of the CBRS service.
Figure 8 shows an example of dynamic configuration of CBSDs following the dynamic activation of a PAL Protection Area (PAL) in accordance with the present invention and as part of the CBRS service.

### DESCRIPTION OF THE INVENTION

In the text that follows the term "operator" is to be understood as generally being an entity or an organization that operates one or more radio base stations constituting one or more radio access networks.

In the text that follows the term "user" is to be understood as generally being a person or a machine connected to the network of the user via a radio terminal.

### State of the art on spectrum sharing

In order to maximize access and use of spectrum, new regulatory models for sharing spectrum between different operators have been defined. An example can be found in WO 2017/030697.

In some of these models, spectrum access and licenses may be associated with services, prerogatives, priorities, and / or contexts that define the circumstances in which these licenses apply. These licenses may allow operators to have exclusive access to the spectrum or allow operators to share spectrum with other operators.

When an operator has a license allowing exclusive access to the spectrum, operators who may interfere with that operators and whose license indicates a lower priority are not allowed to use the spectrum at the same time, on the same frequency and on one same geographical area.

When multiple operators have licenses allowing shared access to the spectrum on the same frequency, over a given geographical area, it is possible to adjust the access and use of the spectrum ie. the amount of spectrum allocated to these operators by selecting and configuring a MAC profile (as described in the next section) on the base stations and radio terminals associated with those operators.

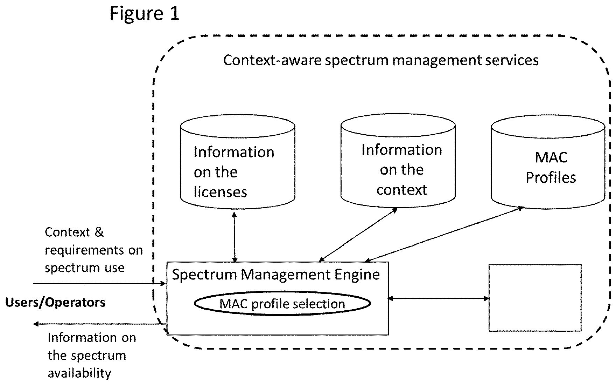

Figure 1 shows a contextual spectrum management service for this type of configuration.

### State of the art on radio environment cards

A radio environment map (REM), representing a dynamic and real-time radio environment, can be used to assist the decision-making process in many radio and system applications such as auto-configuration, auto-optimization, radio network self-repair, dynamic radio planning, and dynamic spectrum sharing.

The REM can be designed as a database containing information about the radio environment (eg, RF signal strength, RF propagation loss, or RF interference level) in spatial, temporal dimensions and frequency.

The REM constructs the radio environment using information about the deployed network topology, radio node configuration, and field measurements. The radio environment map is then calculated in spatial, temporal and frequency dimensions using advanced models of radio propagation.

The REM can be visualized for example using a GIS (Geographic Information System) interface, in order to display the information in the spatial, temporal and frequency dimensions.

State of the art on MAC profiles (Medium Access Control)

A MAC profile consists of a set of parameters associated with a given MAC protocol and a given radio access technology.

The value of these parameters can have an impact on the access and the use of the spectrum and on the effectiveness of the protocol, such as with respect to the rate and / or the delay to access the medium. The MAC profiles for a given radio access technology can therefore be classified according to their level of efficiency (for example depending on the rate and / or the delay to access the medium), or according to their level of occupation, spectrum.

All or a subset of the following parameters can be associated with a MAC profile:
- an inter-frame interval, indicating the time during which a device must wait after a transmission before initiating a new transmission,
- a timer parameter, called "backoff timer", indicating the duration during which a device must wait following the failure when attempting to access the medium before attempting to access the medium again,
- a UL ("uplink") frame duration,
- a DL ("downlink") frame duration,
- a number of UL subframes per frame. This parameter can be applied, for example, to a MAC profile configured on a radio base station, and indicates, for a given frame, how many subframes are allocated to UL transmissions.
- a number of DL subframes per frame. This parameter can be applied, for example, to a MAC profile configured on a radio base station, and indicates, for a given frame, how many subframes are allocated to the DL transmissions.
- a number of interleaves over which the bandwidth is divided. The increase in the number of interleaves makes it possible to spread the transmission power over the spectrum, and thus to reduce the spectral density.

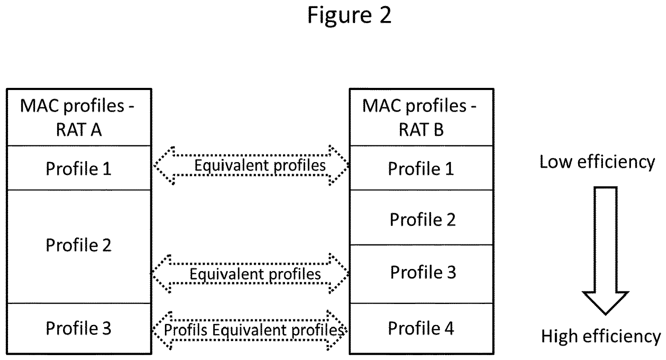

Figure 2 shows an example of equivalence between MAC profiles for two radio access technologies.

State of the art on the CBRS (Citizens Broadband Radio Service)

CBRS is a service defined by the FCC (Federal Communications Commission, Document 15-47) allowing frequency sharing on the 3.5 GHz band between three priority levels or 3 tiers:
- primary users,
- secondary users PAL (Priority Access Licensees),
- third-party GAA (General Authorized Access) users.

The Wireless Innovation Forum defines the architecture and protocols of the CBRS service in accordance with FCC requirements.

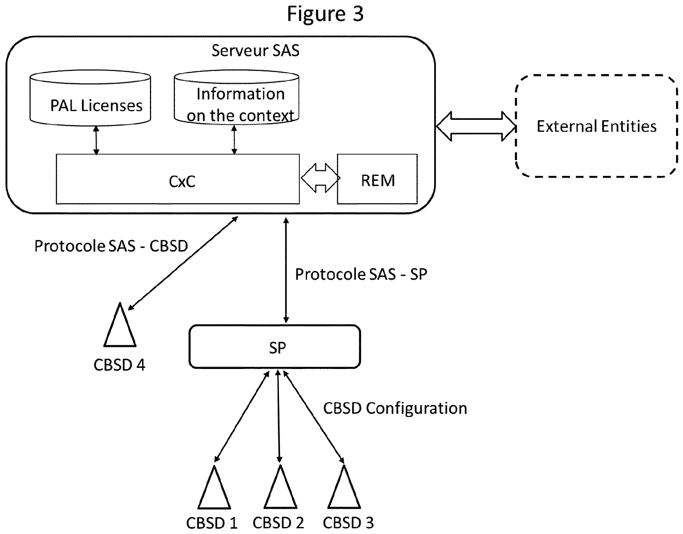

Figure 3 shows the architecture of the CBRS service. A centralized SAS (Spectrum Access System) server controls the access and use of the spectrum of fixed radio base stations called Citizens Broadband Radio Service Devices (CBSDs) connected to this SAS server. These CBSDs can be connected directly to the SAS server (as illustrated by "CBSD 4" in Figure 3) or indirectly through a called Server Proxy (SP) connected to CBSDs.

SP is also called Domain Proxy (DP) as part of the CBRS service.

The protocol between the SAS server and CBSDs or between the SAS server and an SP allows control of the frequencies used by the CBSDs for transmission and / or radio reception.

PAL licenses are associated with PAL Protection geographical areas on which CBSDs can broadcast as PAL users.

The SAS server knows the location of each CBSD and is able to determine, using the information on the PPAs, whether a CBSD is allowed to broadcast as a PAL user.

The SAS server determines the allowed frequencies for a PAL user based on the primary users' use of spectrum information provided by external entities, eg the FCC or the Environment Sensor Capability (ESC) network, connected to the server. SAS.

The SAS server determines the allowed frequencies for a GAA user based on the spectrum usage information not the primary users provided by external entities, for example the FCC or the ESC network, connected to the SAS server, as well as by PAL users connected to this SAS server or connected to other SAS servers.

Several radio access technologies can be used by CBSDs to transmit (eg, LTE-TDD, MulteFire, LTE-U).

The CxC coexistence control function within the SAS makes it possible to manage coexistence and / or synchronization between CBSDs using the same or different radio access technologies. For example, in the same geographical area, a part of the frequencies can be reserved exclusively for a type of radio technology such as LTE-TDD.

When CBSDs of PAL users are deployed and allowed to broadcast on a given frequency, CBSDs of GAA users deployed near PAL users are not allowed to broadcast on that frequency. Indeed, the FCC specifies that at any point in a PAL user's PAL area, aggregation of the signal from CBSDs of GAA users should not exceed 80 dBm on a 10 MHz channel.

This results in an underutilization of the spectrum when the use of the spectrum by the CBSDs of secondary PAL users is low. Moreover, within the same category of CBSDs (PAL users or GAA users), no mechanism is defined that makes it possible to vary, dynamically and in real time, the use of the spectrum according to the needs of the users connected to the network, these CBSDs.

Thus, for example, if on a given geographical area, some CBSDs are used for emergency priority services, while other CBSDs are used for mobile internet services, the interference generated by the CBSDs will be similar. As a result, the quality of service provided by both types of CBSD will be similar. The only way to increase the quality of service for a subset of CBSD is therefore at present to switch off the other CBSDs, or to allow them to transmit only on other frequencies according to the principle of exclusion.

The present invention solves these limitations by enabling a centralized spectrum management server (the SAS server in the context of the CBRS service) or alternatively to a proxy server (the Domain Proxy in the context of the CBRS service) to optimize access, and the use of the radio spectrum by dynamically selecting, for each radio base station (for example a CBSD, in the context of the CBRS service) the most suitable MAC profile as a function of the MAC profiles supported by radio base station, the license of the user of said radio base station and additional information on the context.

### Enhanced CBRS architecture

The centralized spectrum management server configures each CBSD radio base station according to the following steps (step ii is described in more detail in the examples which follow):
i. identification of the authorized frequencies for the said radio base station,
ii. identification, for each frequency identified in i, of the most effective MAC profile authorized, based on:
   - the access radio technology or technologies used by the said radio base station,
   - MAC profiles supported by the said radio base station,
   - the license of the user of the said radio base station,
   - the estimation of the radio propagation and the resulting interference of the said radio base station on the neighboring radio base stations of the same operator or of different operators,
   - MAC profiles used by neighboring radio base stations of the same or different operators,
   - the effective rate of spectrum use by the said radio base station and the neighboring radio base stations,
   - additional context information.
iii. sending, by the said centralized spectrum management server, the authorized frequencies identified in i. and the MAC profile identified in ii. to the said radio base station.

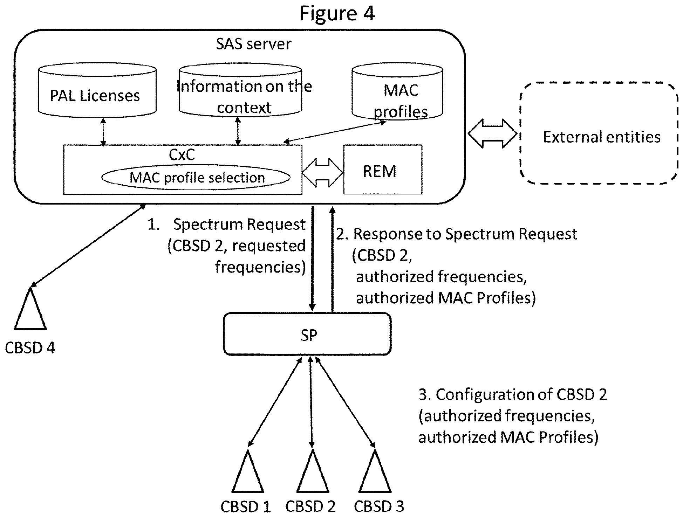

Figure 4 shows a view of the architecture of the Citizens Broadband Radio Service (CBRS) enriched in accordance with the present invention.

The exchanges shown in Figure 4 between the SAS server and an SP can also be made directly between the SAS server and a CBSD.

The elements in bold in Figure 4 highlight some inventive aspects of the present invention compared to the state of the art.

The SAS server has information on the MAC profiles supported by each CBSD. This information can be provided to the SAS server by the CBSDs when they register with the SAS server with the "RegistrationRequest" message, or else provided by an external server to the SAS server, belonging to the network of the CBSD. The message "RegistrationRequest" is standardized by the Wireless Innovation Forum.

In step 1 of Figure 4, a CBSD sends to the SAS server, through the SP, the message "Request spectrum". This "Spectrum Request" message may correspond to a request for authorization to transmit on the frequencies, as defined by the "Grant Request" message specified by the Wireless Innovation Forum.

Upon receipt of this request, the SAS server determines the available frequencies for the CBSD sending the request, as well as the allowed MAC profile, depending on the license of the operator of the said CBSD, CBSDs deployed nearby of this CBSD, as well as the use of the spectrum by primary users and additional contextual information, for example, on the context specific to the user of the said CBSD at the time of the request and the geographical area where the said CBSD is deployed.

The SAS server then sends the message "Response to spectrum request" indicating the authorized frequency (s) and the authorized MAC profile. This "Spectrum Request Response" message may correspond to the "Grant Response" message, sent in response to the "Grant Request" message, and specified by the Wireless Innovation Forum.

On receipt of this message, the CBSD is configured by the SP if it is present or directly by itself, with the MAC profile received and with the frequency or frequencies on which it is authorized to transmit.

In an alternative, several MAC profiles could be provided by the SAS server in the "Spectrum Request Response" message for a given CBSD, each MAC profile being associated with one or more frequencies over which the CBSD is allowed to operate.

In addition, the centralized spectrum management server (ie the SAS server in the context of the CBRS service) can at any time modify the MAC profile of a given radio base station (ie a CBSD in the context of the CBRS service) based on a modification of the context specific to the user of the said CBSD and transmit immediately to the said CBSD, directly or via a server proxy, the MAC profile in a message (ie, in the context of the CBRS service, the message "Heartbeat Response" in response to the "Heartbeat Request" message sent by the said CBSD).

### Examples of Dynamic Reconfiguration of CBSD

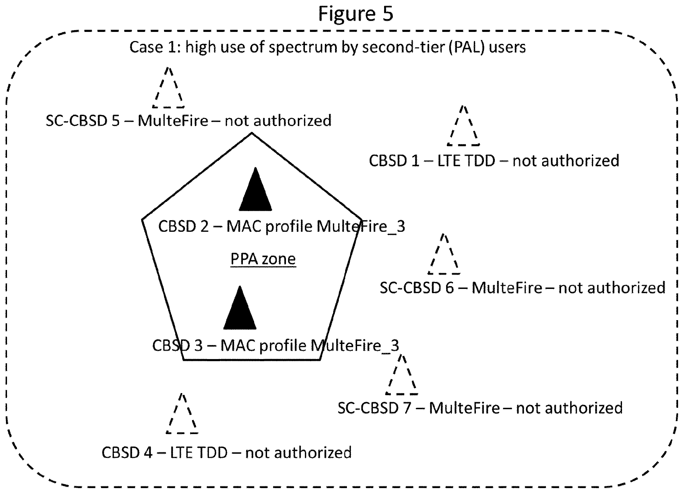

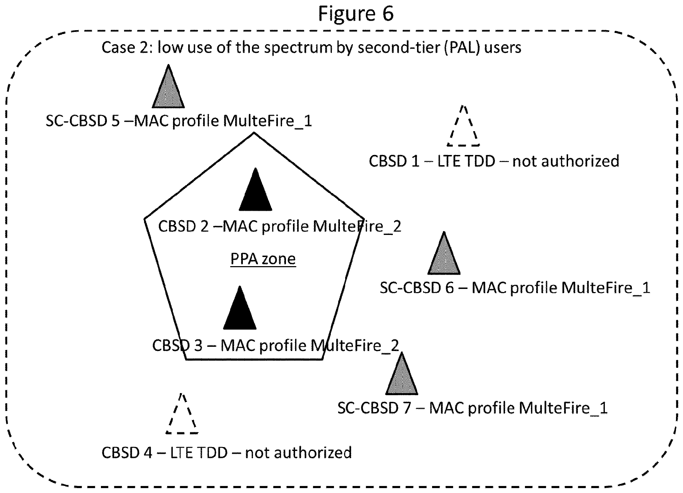

Figure 5 and Figure 6 show a deployment of CBSDs as well as the configuration of their MAC profile, according to the present invention.

CBSDs 1, 4, 5, 6, and 7 are third-tier (GAA).users

The dashed area indicates the PPA area on which CBSDs of second-tier (PAL) users (i.e., CBSDs 2 and 3 in this example) have priority access on CBSDs belonging to third-tier (GAA)users. The deployment of the CBSDs is identical in Figure 5 and Figure 6. However, in Figure 6, the use of the spectrum of CBSDs 2 and 3 is assumed to be low, while in Figure 5 the use of the spectrum of CBSDs 2 and 3 is supposed to be high.

The information on the actual spectrum utilization rate of a CBSD may for example be sent at regular intervals to the SAS server via the message "HeartbeatRequest" by the said CBSD.

Spectrum utilization thresholds may be preconfigured in the SAS server to determine whether spectrum utilization is low or high.

Several types of radio access technologies coexist in this geographical area shown in Figures 5 and 6:
- CBSDs 1 and 4 use LTE TDD technology,
- CBSDs 2, 3, 5, 6 and 7 use MulteFire technology.

When spectrum use by the CBSDs of second-tier (PAL) users (i.e. CBSD 2 and CBSD 3 in this example) is high, as shown in Figure 5, CBSDs 1, 4, 5, 6 and 7 are not allowed. by the SAS server to transmit, so as not to create interference on the dotted PPA area belonging to the secondary users.

On the other hand, when the use of spectrum by the CBSDs of second-tier (PAL) users (i.e. CBSD 2 and CBSD 3 in this example) is low, as illustrated in Figure 6, the CBSDs 5, 6, and 7 of the third-tier (GAA) users are allowed to issue.

In this example shown in Figure 6, the MAC profile configured by the SAS server for the CBSDs of the third-tier (GAA) users is lower (MAC profile MulteFire_1) than that configured on the CBSDs of the second-tier (PAL) users (MAC profile MulteFire _2). The SAS server adjusts the configured MAC profile value for CBSDs of the third-tier (GAA) users, for example in a "Heartbeat Response" message in response to a "Heartbeat Request" message, so that the CBSDs' needs of the second-tier (PAL) users can be guaranteed.

In addition, before allowing third-tier (GAA) users' CBSDs to generate interference on an area associated with second-tier (PAL) users, the SAS server ensures that the radio access technologies used by third-tier (GAA) users and second-tier (PAL) users can coexist without one of the radio technologies preventing the other from operating on the same geographical area.

Thus, in Figure 6, the CBSDs of third-tier (GAA) users using LTE TDD access radio technology are not allowed to transmit because their operation would be likely to cause continuous interference on second-tier (PAL) users.

Thus, CBSDs belonging to the third-tier users (GAA) may be allowed to transmit, even when they are installed near a PAL area operated by a second-tier (PAL) users, without impacting the quality of service provided by the CBSDs belonging to the second tier.

A radio base station is therefore allowed to transmit beyond the maximum permitted interference threshold that has been previously set to protect one or more neighboring radio base stations when the following conditions are met:
i. the effective spectrum utilization rate by the neighboring radio base stations is less than the reference usage which was used to define the maximum interference threshold allowed for the said radio base station,
ii. the radio access technology used by the said radio base station can coexist, on the same geographical area, with the radio technology used by the neighboring base stations.

### Reconfiguring CBSDs according to priorities

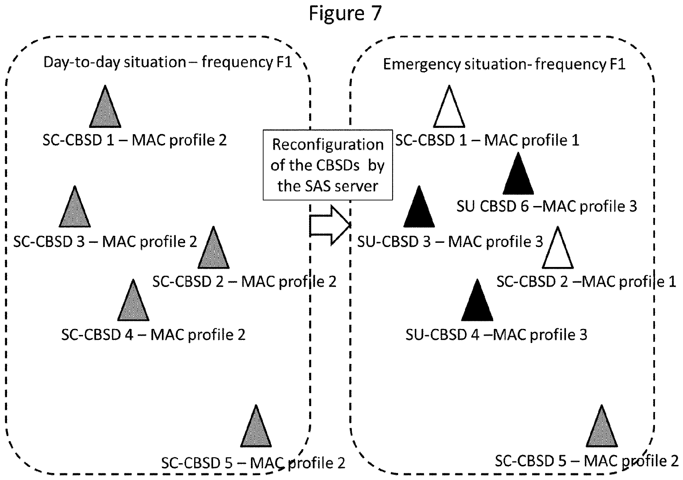

Figure 7 shows the evolution of the configuration of the MAC profile over a given geographical area, and on a given frequency, as a function of information on the context, for example, on the fact that users belonging to a priority service (eg , police, firefighters, military) have just connected to these CBSDs, or that the user of these CBSDs decides to configure them in "priority" mode.

All CBSDs shown in the figure belong to the same category of users (e.g., second-tier PAL users or third-tier GAA users). On the other hand, the types of users authorized to connect to these CBSDs are not identical:
- CBSDs prefixed by "SC" are CBSDs to which normal non-priority users are allowed to connect,
- CBSDs prefixed by "SU" are CBSDs to which emergency service users are allowed to connect.

The SAS server has information about the services supported by each CBSD. This information can be provided to the SAS server by the CBSDs when they register with the SAS server with the "RegistrationRequest" message, or else provided by a server external to the SAS server, belonging to the network of the CBSD user. The message "RegistrationRequest" is standardized by the Wireless Innovation Forum.

On the left side of Figure 5, CBSDs 1 to 5 provide a mobile internet service (as illustrated by the prefix "SC" in the figure). No CBSDs have priority over others. The same MAC profile ("MAC Profile 2") is configured on all these CBSDs.

The right side of Figure 5 shows the deployment and reconfiguration of CBSDs following an emergency. A new station has been installed (CBSD 6), and the CBSD 3 and CBSD 4 stations have been requisitioned for emergency services (as illustrated by the prefix "SU" in the figure).

CBSDs 1 and 2, which may interfere with CBSDs providing a mobile internet service, have been reconfigured by the SAS server with a lower MAC profile ("MAC Profile 1"), whereas CBSDs providing an emergency service have has been reconfigured by the SAS server with a better MAC profile ("MAC Profile 3").

On the other hand, the CBSD 5 is not reconfigured by the SAS server because it has determined that it does not interfere with the CBSDs providing an emergency service. Users of emergency services thus have access to a greater quantity of spectrum and therefore a better quality of service than users of mobile internet services.

### Reconfiguration of CBSDs based on PPA activation

The MAC profile configured on a given CBSD can also be dynamically modified by the SAS server following the activation or deactivation of a PPA on which this CBSD is likely to generate interference.

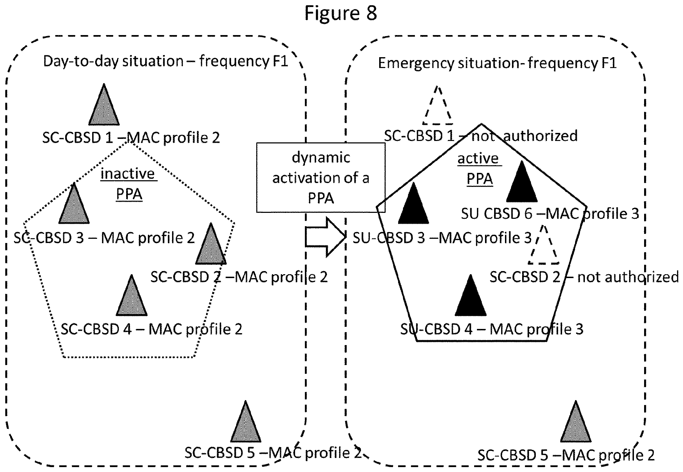

Figure 8 shows an example of dynamic configuration of CBSDs following the dynamic activation of a PPA (or "PAL Protection Area").

The dashed area represents a PPA. When this is inactive (left part of Figure 8), the SAS server does not take into account the presence of this zone during the frequency allocation and when choosing the MAC profile to be configured on the CBSDs located inside or near this area.

When this zone is activated, for example when emergency services request this zone for an intervention, the SAS server reconfigures the CBSDs located inside or outside this zone (the CBSDs 1 and 2 in this example) such that the said CBSDs do not generate interference on the PPA. In this example, the CBSD 5 located outside this zone remains unchanged because it does not generate interference on the activated zone.

## Claims

1. A method for optimizing spectrum access and use, in a multi-tiered frequency sharing environment, by CBSD radio base stations providing the Citizens Broadband Radio Service, CBRS, as defined by the FCC, Federal Communications Commission, **characterized in that** a SAS server connected to said CBSD radio base stations performs, for each CBSD radio base station, the following operations:
i. identification by the said SAS server of the authorized frequencies for the said radio base station,
ii. identification by said SAS server, for each frequency identified in i, of the most effective MAC profile authorized, based on:
a. the access radio technology or technologies used by the said radio base station,
b. the MAC profiles supported by the said radio base station,
c. the license of the operator of the said radio base station,
d. the predicted radio propagation and the resulting interferences from the said radio base station to neighboring radio base stations of the same or different operators,
e. the MAC profiles used by neighboring radio base stations of the same or different operators,
f. the effective rate of spectrum use by the said radio base station and the neighboring radio base stations,
g. additional information associated with the context.
iii. sending, by the said SAS server, the authorized frequencies identified in i. and the MAC profile identified in ii. to the said radio base station.

2. The method according to claim 1, **characterized in that** the MAC profiles supported by a CBSD radio base station are sent by the said CBSD radio base station at the time of its registering on the SAS server, directly or via a server proxy, in the "RegisterRequest" message.

3. The method according to claims 1 to 2, **characterized in that** the SAS server identifies and sends, directly or via a server proxy, the MAC profile selected for a CBSD radio base station in the "Grant Response" message transmitted in response the "Grant Request" message sent by this CBSD radio base station.

4. The method according to claims 1 to 3, **characterized in that** the SAS server modifies the MAC profile and sends it to a CBSD radio base station, directly or via a server proxy, through the message "Heartbeat Response" in response to the "Heartbeat Request" message sent by this CBSD radio base station.

5. The method according to claims 1 to 4, **characterized in that** the effective rate of spectrum use of a CBSD radio base station is sent at regular intervals to the SAS server in the message "HeartbeatRequest" by this base station CBSD radio, directly or via a server proxy.

6. The method according to claims 1 to 5, **characterized in that** the information of the services supported by a CBSD radio base station is sent by this CBSD radio base station at the time of its registering to the SAS server, directly or through a server proxy, in the "RegisterRequest" message.

7. The method according to claims 1 to 6, **characterized in that** the MAC profile configured on a CBSD radio base station is dynamically modified by the said SAS server to allow a CBSD radio base station to transmit beyond a maximum permissible interference threshold, when the effective rate of spectrum use by the neighboring CBSD radio base stations is less than the reference spectrum use which was used to define this interference threshold and that the radio access technology used by the said CBSD radio base station can coexist, on the same geographical area, with the radio technology used by neighboring CBSD radio base stations.

8. The method according to claims 1 to 7, **characterized in that** the MAC profile configured on a CBSD radio base station is dynamically modified by the said SAS server to adapt the said base station to a change of quality of service or priority of service required on this CBSD radio base station.

9. The method according to claims 1 to 8, **characterized in that** the MAC profile configured on a CBSD radio base station is dynamically modified by the said SAS server following the activation or deactivation of a PAL Protection Area, PPA, on which this CBSD radio base station is likely to generate interference.

## Patentansprüche

1. Eine Methode zum Optimieren des Zugangs zu den Funkfrequenzen und ihrer Verwendung in einer mehrstufigen Frequenzverteilungsumgebung durch CBSD-Funkbasisstationen, die den von der FCC (Federal Communications Commission) definierten Citizens Broadband Radio Service (CBRS) bereitstellen, **dadurch gekennzeichnet, dass** ein mit den CBSD-Funkbasisstationen verbundener SAS-Server für jede CBSD-Funkbasisstationen die folgenden Abläufe durchführt:
i. Identifizieren der autorisierten Frequenzen für die Funkbasisstation durch den SAS-Server,
ii. Identifizieren des effektivsten autorisierten MAC-Profils durch den SAS-Server für jede in i identifizierte Frequenz, basierend auf:
a. der Zugangsfunktechnologie oder den Zugangsfunktechnologien, die von der Funkbasisstation verwendet werden,
b. den von der Funkbasisstation unterstützten MAC-Profilen,
c. der Lizenz des Betreibers der Funkbasisstation,
d. der prognostizierten Funkausbreitung und den resultierenden Störungen von der Funkbasisstation auf benachbarten Funkbasisstationen desselben Betreibers oder unterschiedlicher Betreiber,
e. den MAC-Profilen, die von benachbarten Funkbasisstationen desselben Betreibers oder unterschiedlicher Betreiber verwendet werden,
f. der effektiven Funkfrequenznutzungsrate der Funkbasisstation und der benachbarten Funkbasisstationen,
g. zusätzlichen Informationen zum Kontext.
iii. Senden der autorisierten Frequenzen, die in i. identifiziert wurden, und des MAC-Profils, das in ii. identifiziert wurde, durch den SAS-Server an die Funkbasisstation.

2. Verfahren nach Anspruch 1, **dadurch gekennzeichnet, dass** die von einer CBSD-Funkbasisstation unterstützten MAC-Profile von der CBSD-Funkbasisstation zum Zeitpunkt ihrer Registrierung auf dem SAS-Server direkt oder über einen Proxy-Server in der Nachricht "Register Request" gesendet werden.

3. Verfahren nach den Ansprüchen 1 bis 2, **dadurch gekennzeichnet, dass** der SAS-Server das für eine CBSD-Funkbasisstation in der Nachricht "Grant Response", die als Antwort auf die von dieser CBSD-Funkbasisstation gesendeten Nachricht "Grant Request" übertragen wurde, ausgewählte MAC-Profil identifiziert und direkt oder über einen Proxy-Server sendet.

4. Verfahren nach den Ansprüchen 1 bis 3, **dadurch gekennzeichnet, dass** der SAS-Server das MAC-Profil einer CBSD-Funkbasisstation modifiziert und es ihr direkt oder über einen Proxy-Server über die Nachricht "Heartbeat Response" als Antwort auf die von dieser CBSD-Funkbasisstation gesendeten Nachricht "Heartbeat Request" sendet.

5. Verfahren nach den Ansprüchen 1 bis 4, **dadurch gekennzeichnet, dass** die effektive Funkfrequenznutzungsrate einer CBSD-Funkbasisstation in regelmäßigen Abständen in der Nachricht "Heartbeat Request" von dieser CBSD-Funkbasisstation direkt oder über einen Proxy-Server an den SAS-Server gesendet wird.

6. Verfahren nach den Ansprüchen 1 bis 5, **dadurch gekennzeichnet, dass** die Informationen zu den von einer CBSD-Funkbasisstation unterstützten Diensten von dieser CBSD-Funkbasisstation zum Zeitpunkt ihrer Registrierung auf dem SAS-Server direkt oder über einen Proxy-Server in der Nachricht "Register Request" gesendet werden.

7. Verfahren nach den Ansprüchen 1 bis 6, **dadurch gekennzeichnet, dass** das auf einer CBSD-Funkbasisstation konfigurierte MAC-Profil von dem SAS-Server dynamisch modifiziert wird, um es einer CBSD-Funkbasisstation zu ermöglichen, über eine maximal zulässige Interferenzschwelle hinaus zu übertragen, wenn die effektive Funkfrequenznutzungsrate durch die benachbarten CBSD-Funkbasisstationen geringer ist als die Funkfrequenznutzung, die zur Definition dieser Interferenzschwelle verwendet wurde, und dass die von der CBSD-Funkbasisstation verwendete Funkzugangstechnologie in demselben geografischen Bereich mit der Funktechnologie koexistieren kann, die von benachbarten CBSD-Funkbasisstationen verwendet wird.

8. Verfahren nach den Ansprüchen 1 bis 7, **dadurch gekennzeichnet, dass** das auf einer CBSD-Funkbasisstation konfigurierte MAC-Profil von dem SAS-Server dynamisch modifiziert wird, um die Basisstation an eine für diese CBSD-Funkbasisstation erforderliche Änderung der Dienstqualität oder Dienstpriorität anzupassen.

9. Verfahren nach den Ansprüchen 1 bis 8, **dadurch gekennzeichnet, dass** das auf einer CBSD-Funkbasisstation konfigurierte MAC-Profil von dem SAS-Server nach der Aktivierung oder Deaktivierung eines PAL-Schutzbereichs (PPA), in dem diese CBSD-Funkbasisstation voraussichtlich Interferenzen verursacht, dynamisch modifiziert wird.

## Revendications

1. Une méthode pour optimiser l'accès et l'utilisation du spectre, dans un environnement de partage de fréquence multi-tiers, par des stations de base radio CBSD fournissant le service CBRS ou Citizens Broadband Radio Service tel que défini par la FCC ou Fédéral Communications Commission, **caractérisée en ce qu'**un serveur SAS connecté auxdites stations de base radio CBSD réalise, pour chaque station de base radio CBSD, les opérations suivantes :
i. identification par ledit serveur de gestion du spectre des fréquences autorisées pour ladite station de base radio,
ii. identification par ledit serveur de gestion du spectre, pour chaque fréquence identifiée en i, du profil MAC le plus efficace autorisé, en fonction:
a. de la ou des technologies radio d'accès utilisées par ladite station de base radio,
b. des profils MAC supportés par ladite station de base radio,
c. de la licence de l'utilisateur de ladite station de base radio,
d. de l'estimation de la propagation radio et des interférences résultantes de ladite station de base radio sur les stations de base radio voisines du même utilisateur ou d'utilisateurs différents,
e. des profils MAC utilisés par les stations de base radio voisines du même utilisateur ou d'utilisateurs différents,
f. du taux effectif d'utilisation du spectre par ladite station de base radio et par les stations de base radio voisines,
g. des informations additionnelles associées au contexte.
iii. envoi par ledit serveur centralisé de gestion du spectre des fréquences autorisées ainsi que du profil MAC identifié en ii., à ladite station de base radio.

2. La méthode selon la revendication 1, **caractérisée en ce que** les profils MAC supportés par une station de base radio CBSD sont envoyés par ladite station de base radio CBSD au moment de son enregistrement sur le serveur SAS, directement ou via un serveur proxy, dans le message « RegisterRequest ».

3. La méthode selon les revendications 1 à 2, **caractérisée en ce que** le serveur SAS identifie et envoie, directement ou via un serveur proxy, le profil MAC sélectionné pour une station de base radio CBSD dans le message « Grant Response » transmis en réponse au message « Grant Request » envoyé par cette station de base radio CBSD.

4. La méthode selon les revendications 1 à 3, **caractérisée en ce que** le serveur SAS modifie le profil MAC d'une station de base radio CBSD et lui envoie ce profil MAC, directement ou via un serveur proxy, au travers du message « Heartbeat Response » en réponse au message « Heartbeat Request » envoyé par cette station de base radio CBSD.

5. La méthode selon les revendications 1 à 4, **caractérisée en ce que** le taux effectif d'utilisation du spectre d'une station de base radio CBSD est envoyé à intervalles réguliers au serveur SAS dans le message « HeartbeatRequest » par cette station de base radio CBSD, directement ou via un serveur proxy.

6. La méthode selon les revendications 1 à 5, **caractérisée en ce que** l'information sur les services supportés par une station de base radio CBSD est envoyée par cette station de base radio CBSD au moment de son enregistrement sur le serveur SAS, directement ou via un serveur proxy, dans le message « RegisterRequest ».

7. La méthode selon les revendications 1 à 6, **caractérisée en ce que** le profil MAC configuré sur une station de base radio CBSD est modifié dynamiquement par ledit serveur SAS pour permettre à une station de base radio CBSD d'émettre au-delà d'un seuil d'interférence maximal autorisé, lorsque le taux effectif d'utilisation du spectre par les stations de base radio CBSD voisines de cette station de base radio CBSD est inférieur à l'utilisation de référence qui a servi à définir ce seuil d'interférence maximal autorisé et que la technologie d'accès radio utilisée par ladite station de base radio CBSD peut coexister, sur une même zone géographique, avec la technologie radio utilisée par les stations de base radio CBSD voisines.

8. La méthode selon les revendications 1 à 7, **caractérisée en ce que** le profil MAC configuré sur une station de base radio CBSD est modifié dynamiquement par ledit serveur SAS pour adapter ladite station de base à un changement de qualité de service ou de priorité de service requis sur cette station de base radio CBSD.

9. La méthode selon les revendications 1 à 8, **caractérisée en ce que** le profil MAC configuré sur une station de base radio CBSD est modifié dynamiquement par ledit serveur SAS suite à l'activation ou la désactivation d'une PAL Protection Area ou PPA sur laquelle cette station de base radio CBSD est susceptible de générer des interférences.
